# EUROPEAN PATENT SPECIFICATION

(11) **EP 4 227 353 B1**
(45) Date of publication and mention of the grant of the patent: **06.11.2024**
(21) Application number: 21885640.9
(22) Date of filing: 04.08.2021
(51) Int. Cl.: C08K 5/14, C08L 11/00, C08L 15/00

(54) **RUBBER COMPOSITION, VULCANIZED SUBSTANCE, AND VULCANIZED MOLDED OBJECT**
KAUTSCHUKZUSAMMENSETZUNG, VULKANISIERTE SUBSTANZ UND VULKANISIERTER FORMKÖRPER
COMPOSITION DE CAOUTCHOUC, PRODUIT VULCANISÉ ET CORPS MOULÉ VULCANISÉ

(30) Priority: 26.10.2020 JP 2020178695
(43) Date of publication of application: 16.08.2023
(73) Proprietor: Denka Company Limited, Tokyo 103-8338 (JP)
(72) Inventor: KONDO Atsunori, Tokyo 103-8338 (JP); FUJII Nobuhiko, Tokyo 103-8338 (JP)
(74) Representative: Hoffmann Eitle
(86) International application number: PCT/JP2021/028981
(87) International publication number: WO 2022/091518

(56) References cited:
- CN-A- 104 277 268
- CN-A- 106 674 664
- JP-A- 2000 281 839
- JP-A- 2007 284 542
- JP-A- 2007 321 041
- JP-A- 2010 540 738
- JP-A- 2019 077 751
- JP-A- H0 753 782
- JP-A- S5 634 735
- JP-A- S5 980 449
- JP-A- S57 125 230
- US-A- 5 118 546
- US-A1- 2004 071 984

## Description

### Technical Field

The present invention relates to a rubber composition, a vulcanizate, a vulcanized molded article, and the like.

### Background Art

Chloroprene polymers are excellent in various properties and have been used in a wide variety of fields such as automotive parts, adhesives, and various industrial rubber parts by utilizing their properties. As a technique in which a chloroprene polymer can be used, rubber compositions described in Patent Literatures 1 to 4 below have been known.

### Citation List

### Patent Literature

Patent Literature 1: Japanese Unexamined Patent Publication No. 2016-23191
Patent Literature 2: Japanese Unexamined Patent Publication No. 2012-111899
Patent Literature 3: Japanese Unexamined Patent Publication No. H9-268239
Patent Literature 4: CN106674664 A

### Summary of Invention

### Technical Problem

For a rubber composition containing a chloroprene polymer, it is required to achieve various properties at a high level in a vulcanizate of the rubber composition, and it may be required to provide a vulcanizate having excellent abrasion resistance and water resistance in some cases.

An object of an aspect of the present invention is to provide a rubber composition with which a vulcanizate having excellent abrasion resistance and water resistance can be obtained. An object of another aspect of the present invention is to provide a vulcanizate of the above-described rubber composition. An object of still another aspect of the present invention is to provide a vulcanized molded article of the above-described rubber composition.

### Solution to Problem

A first embodiment of an aspect of the present invention relates to a rubber composition containing 100 parts by mass of a chloroprene polymer, more than 0 parts by mass and 25 parts by mass or less of a diene-based polymer having an epoxy group, and 0.3 to 1.8 parts by mass of an organic peroxide, in which the chloroprene polymer includes a copolymer of chloroprene.

A second embodiment of the aspect of the present invention relates to a rubber composition containing 100 parts by mass of a chloroprene polymer, more than 0 parts by mass and 25 parts by mass or less of a diene-based polymer having an epoxy group, and 0.3 to 1.8 parts by mass of an organic peroxide, in which the chloroprene polymer includes a homopolymer of chloroprene.

Another aspect of the present invention relates to a vulcanizate of the aforementioned rubber composition. Still another aspect of the present invention relates to a vulcanized molded article of the aforementioned rubber composition.

### Advantageous Effects of Invention

According to an aspect of the present invention, it is possible to provide a rubber composition with which a vulcanizate having excellent abrasion resistance and water resistance can be obtained, and in Akron abrasion test according to JIS K 6264-2:2019, abrasion resistance of 115 mm³ or less can be obtained in the case of using a copolymer of chloroprene, and abrasion resistance of 130 mm³ or less can be obtained in the case of using a homopolymer of chloroprene. According to another aspect of the present invention, it is possible to provide a vulcanizate of the above-described rubber composition. According to still another aspect of the present invention, it is possible to provide a vulcanized molded article of the above-described rubber composition.

### Description of Embodiments

Hereinafter, embodiments for carrying out the present invention will be described. Note that, embodiments described below are only typical exemplary embodiments of the present invention and the scope of the present invention is not restricted by these at all.

"A or more" of the numerical range means A and a range of more than A. "A or less" of the numerical range means A and a range of less than A. In the numerical ranges that are described stepwise in the present specification, the upper limit value or the lower limit value of the numerical range of a certain stage can be arbitrarily combined with the upper limit value or the lower limit value of the numerical range of another stage. In the numerical ranges that are described in the present specification, the upper limit value or the lower limit value of the numerical range may be replaced with the value shown in Examples. "A or B" may include any one of A and B, and may also include both of A and B. Materials listed as examples in the present specification can be used singly or in combinations of plural kinds thereof, unless otherwise specified. In a case where a plurality of substances corresponding to each component exist in the composition, the content of each component in the composition means the total amount of the plurality of substances that exist in the composition, unless otherwise specified. The term "step" includes not only an independent step but also a step by which an intended action of the step is achieved, though the step cannot be clearly distinguished from other steps. A "(meth)acrylate" means at least one of acrylates and corresponding methacrylates. The same applies also to other similar expressions such as "(meth)acrylic acid".

### <Rubber composition>

A rubber composition of the present embodiment (including a first embodiment and a second embodiment; the same applies hereinafter) contains (1) 100 parts by mass of a chloroprene polymer, (2) more than 0 parts by mass and 25 parts by mass or less of a diene-based polymer having an epoxy group (hereinafter, referred to as "diene-based polymer A"), and (3) 0.3 to 1.8 parts by mass of an organic peroxide. In the rubber composition of the first embodiment, the chloroprene polymer includes a copolymer of chloroprene. In the rubber composition of the second embodiment, the chloroprene polymer includes a homopolymer of chloroprene. A rubber composition containing a chloroprene polymer including a copolymer of chloroprene and a homopolymer of chloroprene corresponds to the rubber composition of the second embodiment.

According to the rubber composition of the present embodiment, a vulcanizate having excellent abrasion resistance and water resistance can be obtained as a vulcanizate obtained by vulcanizing the rubber composition. The present inventors have conducted intensive studies, and as a result, have found that magnesium oxide may improve mechanical properties but the improving effect thereof is not sufficient, and have also found that the magnesium oxide may deteriorate water resistance, and have found that, based on the findings, instead of improvement in mechanical properties using the magnesium oxide, both of abrasion resistance and water resistance are improved by using specific amounts of the diene-based polymer A and the organic peroxide in the rubber composition containing a chloroprene polymer.

According to the rubber composition of the first embodiment, in Akron abrasion test according to JIS K 6264-2:2019, abrasion resistance of 115 mm³ or less (for example, less than 110 mm³) can be obtained. According to the rubber composition of the second embodiment, in Akron abrasion test according to JIS K 6264-2:2019, abrasion resistance of 130 mm³ or less (for example, less than 125 mm³) can be obtained. Regarding the water resistance, according to the rubber composition of the present embodiment, a vulcanizate having a volume change rate of 4% or less (for example, 2 to 4%) when being immersed in water at 80°C for 72 hours can be obtained.

In recent years, products are required to have a longer lifetime, chemical properties such as water resistance and oil resistance are required to be improved together with mechanical properties such as abrasion resistance and exothermicity. The present inventors have conducted intensive studies in order to meet such demands, and as a result, have found that, by using specific amounts of the diene-based polymer A and the organic peroxide in the rubber composition containing a chloroprene polymer, mechanical properties such as abrasion resistance and exothermicity and chemical properties such as water resistance and oil resistance can be simultaneously improved. That is, according to an embodiment of the rubber composition of the present embodiment, a vulcanizate having excellent abrasion resistance, water resistance, oil resistance, and exothermicity (low exothermicity) can be obtained. Regarding the oil resistance, for example, according to an embodiment of the rubber composition of the present embodiment, in comparison with the case of using chloroprene polymers of the same type, a vulcanizate having a small volume change rate when being immersed in oil at 130°C for 72 hours can be obtained. Regarding the exothermicity, for example, according to an embodiment of the rubber composition of the present embodiment, a vulcanizate providing a low calorific value can be obtained in measurement according to JIS K 6265:2018 (under the conditions of 50°C, a deformation of 0.175 inches, a load of 55 pounds, and a frequency per minute of 1800).

### (1) Chloroprene polymer

The chloroprene polymer has chloroprene (2-chloro-1,3-butadiene) as a monomer unit (chloroprene monomer unit; monomer unit = structural unit), and can have a chloroprene-derived monomer unit. Examples of the chloroprene polymer include a homopolymer of chloroprene and a copolymer of chloroprene (a copolymer of chloroprene and a monomer copolymerizable with chloroprene), and a mixture of these polymers may be used. The chloroprene polymer may be a chloroprene-based rubber. The polymer structure of the chloroprene polymer is not particularly limited.

Examples of the monomer copolymerizable with chloroprene include esters of (meth)acrylic acid (such as methyl (meth)acrylate, butyl (meth)acrylate, and 2-ethylhexyl (meth)acrylate), hydroxyalkyl (meth)acrylate (such as 2-hydroxymethyl (meth)acrylate, 2-hydroxyethyl (meth)acrylate, and 2-hydroxypropyl (meth)acrylate), 2,3-dichloro-1,3-butadiene, 1-chloro-1,3-butadiene, butadiene, isoprene, ethylene, styrene, and acrylonitrile. The monomer copolymerizable with chloroprene is not limited to one kind, and, for example, the copolymer of chloroprene may be a copolymer obtained by copolymerizing three or more kinds of monomers containing chloroprene.

In the rubber composition of the first embodiment, the chloroprene polymer includes a copolymer of chloroprene. In the rubber composition of the second embodiment, the chloroprene polymer includes a homopolymer of chloroprene. According to the rubber composition of the first embodiment, particularly excellent abrasion resistance and oil resistance are easily obtained. The chloroprene polymer in the rubber composition of the second embodiment may include a copolymer of chloroprene with at least one selected from the group consisting of 2,3-dichloro-1,3-butadiene and acrylonitrile, from the viewpoint of easily obtaining excellent abrasion resistance, water resistance, oil resistance, and exothermicity in a well-balanced manner. A copolymer of chloroprene with acrylonitrile has chloroprene and acrylonitrile as monomer units and can have a chloroprene-derived monomer unit and an acrylonitrile-derived monomer unit.

In the case of using a copolymer of chloroprene (the rubber composition of the first embodiment), the content (copolymerized amount) of the chloroprene monomer unit is less than 100% by mass on the basis of the total mass of the chloroprene polymer, and may be in the following range from the viewpoint of easily obtaining excellent abrasion resistance, water resistance, oil resistance, and exothermicity in a well-balanced manner. The content of the chloroprene monomer unit may be 50% by mass or more, more than 50% by mass, 60% by mass or more, 70% by mass or more, 80% by mass or more, 85% by mass or more, or 90% by mass or more. The content of the chloroprene monomer unit may be 99% by mass or less, 97% by mass or less, 95% by mass or less, 93% by mass or less, or 91% by mass or less. From these viewpoints, the content of the chloroprene monomer unit may be 50% by mass or more and less than 100% by mass, 70 to 99% by mass, 80 to 97% by mass, or 90 to 95% by mass.

In the case of using a copolymer of chloroprene (the rubber composition of the first embodiment), the content (copolymerized amount) of the monomer unit of the monomer copolymerizable with chloroprene is more than 0% by mass on the basis of the total mass of the chloroprene polymer, and may be in the following range from the viewpoint of easily obtaining excellent abrasion resistance, water resistance, oil resistance, and exothermicity in a well-balanced manner and the viewpoint of easily exhibiting the effect obtained by copolymerizing these monomers. The content of the monomer unit may be 50% by mass or less, less than 50% by mass, 40% by mass or less, 30% by mass or less, 20% by mass or less, 15% by mass or less, or 10% by mass or less. The content of the monomer unit may be 1% by mass or more, 3% by mass or more, 5% by mass or more, 7% by mass or more, or 9% by mass or more. From these viewpoints, the content of the chloroprene monomer unit may be more than 0% by mass and 50% by mass or less, 1 to 30% by mass, 3 to 20% by mass, or 5 to 10% by mass. From the same viewpoint, the content of the acrylonitrile monomer unit may be in these respective ranges on the basis of the total mass of the chloroprene polymer.

In the case of using a copolymer of chloroprene (the rubber composition of the first embodiment), the content (copolymerized amount) of the monomer unit of the monomer copolymerizable with chloroprene is more than 0% by mass with respect to 100 parts by mass of the chloroprene monomer unit, and may be in the following range from the viewpoint of easily obtaining excellent abrasion resistance, water resistance, oil resistance, and exothermicity in a well-balanced manner and the viewpoint of easily exhibiting the effect obtained by copolymerizing these monomers. The content of the monomer unit may be 50 parts by mass or less, less than 50 parts by mass, 40 parts by mass or less, 30 parts by mass or less, 20 parts by mass or less, 15 parts by mass or less, or 12 parts by mass or less. The content of the monomer unit may be 1 part by mass or more, 3 parts by mass or more, 5 parts by mass or more, 7 parts by mass or more, 9 parts by mass or more, or 10 parts by mass or more. From these viewpoints, the content of the monomer unit may be more than 0 parts by mass and 50 parts by mass or less, 1 to 40 parts by mass, 5 to 30 parts by mass, or 10 to 20 parts by mass. From the same viewpoint, the content of the acrylonitrile monomer unit may be in these respective ranges with respect to 100 parts by mass of the chloroprene monomer unit.

The chloroprene polymer (such as a homopolymer of chloroprene or a copolymer of chloroprene) may be a sulfur-modified chloroprene polymer, a mercaptan-modified chloroprene polymer, a xanthogen-modified chloroprene polymer, a dithiocarbonate-based chloroprene polymer, a trithiocarbonate-based chloroprene polymer, a carbamate-based chloroprene polymer, or the like.

The weight average molecular weight (Mw), the number average molecular weight (Mn), and the molecular weight distribution (polydispersity of the molecular weight, Mw/Mn) of the chloroprene polymer may be in the following range, from the viewpoint of easily obtaining excellent abrasion resistance, water resistance, oil resistance, and exothermicity in a well-balanced manner.

The weight average molecular weight of the chloroprene polymer may be 10×10³ g/mol or more, 50×10³ g/mol or more, 100×10³ g/mol or more, 300×10³ g/mol or more, 400×10³ g/mol or more, or 450×10³ g/mol or more. The weight average molecular weight of the chloroprene polymer may be 5000×10³ g/mol or less, 3000×10³ g/mol or less, 2000×10³ g/mol or less, 1000×10³ g/mol or less, 800×10³ g/mol or less, or 500×10³ g/mol or less. From these viewpoints, the weight average molecular weight of the chloroprene polymer may be 10×10³ to 5000×10³ g/mol, 100×10³ to 2000×10³ g/mol, or 300×10³ to 1000×10³ g/mol.

The number average molecular weight of the chloroprene polymer may be 1×10³ g/mol or more, 5×10³ g/mol or more, 10×10³ g/mol or more, 50×10³ g/mol or more, 100×10³ g/mol or more, or 130×10³ g/mol or more. The number average molecular weight of the chloroprene polymer may be 1000×10³ g/mol or less, 800×10³ g/mol or less, 500×10³ g/mol or less, 300×10³ g/mol or less, 200×10³ g/mol or less, or 150×10³ g/mol or less. From these viewpoints, the number average molecular weight of the chloroprene polymer may be 1×10³ to 1000×10³ g/mol, 10×10³ to 500×10³ g/mol, or 50×10³ to 300×10³ g/mol.

The molecular weight distribution of the chloroprene polymer may be 1.0 or more, 1.5 or more, 2.0 or more, 2.5 or more, 3.0 or more, 3.2 or more, or 3.4 or more. The molecular weight distribution of the chloroprene polymer may be 10 or less, 8.0 or less, 5.0 or less, 4.0 or less, 3.8 or less, 3.5 or less, or 3.4 or less. From these viewpoints, the molecular weight distribution of the chloroprene polymer may be 1.0 to 10, 2.0 to 5.0, or 2.5 to 4.0.

The weight average molecular weight (Mw) and the number average molecular weight (Mn) of the chloroprene polymer can be obtained by measuring with gel permeation chromatography (GPC) and converting in terms of polystyrene, and specifically, can be measured by the methods described in Examples.

The content of the chloroprene polymer may be 50% by mass or more, more than 50% by mass, 70% by mass or more, 90% by mass or more, 93% by mass or more, more than 93% by mass, 95% by mass or more, more than 95% by mass, 96% by mass or more, 98% by mass or more, or 99% by mass or more, on the basis of the total mass of a rubber component contained in the rubber composition, from the viewpoint of easily obtaining excellent abrasion resistance, water resistance, oil resistance, and exothermicity in a well-balanced manner. The rubber component contained in the rubber composition may be an embodiment composed of a chloroprene polymer (substantially 100% by mass of the rubber component contained in the rubber composition is a chloroprene polymer).

The content of the chloroprene polymer may be in the following range on the basis of the total mass of the rubber composition. The content of the chloroprene polymer may be 30% by mass or more, 40% by mass or more, 45% by mass or more, 50% by mass or more, more than 50% by mass, 54% by mass or more, 55% by mass or more, 57% by mass or more, 58% by mass or more, or 59% by mass or more, from the viewpoint of easily obtaining excellent abrasion resistance, water resistance, oil resistance, and exothermicity in a well-balanced manner. The content of the chloroprene polymer may be 90% by mass or less, 85% by mass or less, 80% by mass or less, 75% by mass or less, 70% by mass or less, 65% by mass or less, 62% by mass or less, 60% by mass or less, or 58% by mass or less, from the viewpoint of easily obtaining excellent abrasion resistance, water resistance, oil resistance, and exothermicity in a well-balanced manner. From these viewpoints, the content of the chloroprene polymer may be 30 to 90% by mass, 40 to 80% by mass, or 50 to 70% by mass.

A method for producing a chloroprene polymer includes a polymerization step of polymerizing a raw material monomer containing chloroprene. The chloroprene polymer can be obtained, for example, by emulsion polymerization of a raw material monomer containing chloroprene (for example, a raw material monomer containing chloroprene as a main component) using an emulsifying dispersant in the presence of a polymerization reaction catalyst, catalyst-activating agent, a polymerization initiator, a chain transfer agent, or the like.

Examples of the emulsifying dispersant include alkali metal salts of saturated or unsaturated fatty acids having 6 to 22 carbon atoms, alkali metal salts of rosin acids or disproportionated rosin acids (for example, potassium rosinate), and alkali metal salts (for example, sodium salt) of β-naphthalenesulfonic acid-formalin condensates.

Examples of the polymerization reaction catalyst include organic peroxides such as ketone peroxides, peroxy ketals, hydroperoxides (for example, t-butyl hydroperoxide), dialkyl peroxides, and diacyl peroxides.

Examples of the catalyst-activating agent include sodium sulfite, potassium sulfite, iron (II) oxide, anthraquinone, sodium β-sulfonate, formamidine sulfonic acid, and L-ascorbic acid.

A polymerization initiator is not particularly limited, and it is possible to use a known polymerization initiator which is generally used in the emulsion polymerization of chloroprene. Examples of the polymerization initiator include inorganic peroxides (such as potassium persulfate, ammonium persulfate, and sodium persulfate), and hydrogen peroxide.

A chain transfer agent is not particularly limited, and it is possible to use a known chain transfer agent which is generally used in the emulsion polymerization of chloroprene. Examples of the chain transfer agent include long chain alkylmercaptans such as n-dodecylmercaptan, t-dodecylmercaptan, and n-octylmercaptan; xanthogen compounds such as diisopropylxanthogen disulfide and diethylxanthogen disulfide; iodoform; and thiocarbonyl compounds such as benzyl 1-pyrroldithiocarbamate (also known as benzyl 1-pyrrolcarbodithioate), benzylphenyl carbodithioate, 1-benzyl-N,N-dimethyl-4-aminodithiobenzoate, 1-benzyl-4-methoxydithiobenzoate, 1-phenylethylimidazole dithiocarbamate (also known as 1-phenylethylimidazole carbodithioate), benzyl-1-(2-pyrrolidinone)dithiocarbamate (also known as benzyl-1-(2-pyrrolidinone)carbodithioate), benzylphthalimidyl dithiocarbamate (also known as benzylphthalimidyl carbodithioate), 2-cyanoprop-2-yl-1-pyrroldithiocarbamate (also known as 2-cyanoprop-2-yl-1-pyrrolcarbodithioate), 2-cyanobut-2-yl-1-pyrroldithiocarbamate (also known as 2-cyanobut-2-yl-1-pyrrolcarbodithioate), benzyl-1-imidazole dithiocarbamate (also known as benzyl-1-imidazole carbodithioate), 2-cyanoprop-2-yl-N,N-dimethyl dithiocarbamate, benzyl-N,N-diethyl dithiocarbamate, cyanomethyl-1-(2-pyrrolidone)dithiocarbamate, 2-(ethoxycarbonylbenzyl)prop-2-yl-N,N-diethyl dithiocarbamate, 1-phenyl ethyl dithiobenzoate, 2-phenylprop-2-yldithiobenzoate, 1-aceto-1-yl-ethyl dithiobenzoate, 1-(4-methoxyphenyl)ethyl dithiobenzoate, benzyl dithioacetate, ethoxycarbonylmethyl dithioacetate, 2-(ethoxycarbonyl)prop-2-yldithiobenzoate, 2-cyanoprop-2-yldithiobenzoate, t-butyl dithiobenzoate, 2,4,4-trimethylpenta-2-yldithiobenzoate, 2-(4-chlorophenyl)-prop-2-yldithiobenzoate, 3-vinylbenzyl dithiobenzoate, 4-vinylbenzyl dithiobenzoate, benzyl diethoxyphosphinyl dithioformate, t-butyltrithioperbenzoate, 2-phenylprop-2-yl-4-chlorodithiobenzoate, naphthalene-1-carboxylic acid-1-methyl-1-phenyl-ethyl ester, 4-cyano-4-methyl-4-thiobenzyl sulfanyl butyric acid, dibenzyl tetrathioterephthalate, carboxymethyl dithiobenzoate, polyethylene oxide) having dithiobenzoate terminal, poly(ethylene oxide) having 4-cyano-4-methyl-4-thiobenzylsulfanyl butyrate terminal, 2-[(2-phenylethanethioyl)sulfanyl]propanoic acid, 2-[(2-phenylethanethioyl)sulfanyl]succinic acid, potassium 3,5-dimethyl-1H-pyrazol-1-carbodithioate, cyanomethyl-3,5-dimethyl-1H-pyrazol-1-carbodithioate, cyanomethyl methyl-(phenyl)dithiocarbamate, benzyl-4-chlorodithiobenzoate, phenyl methyl-4-chlorodithiobenzoate, 4-nitrobenzyl-4-chlorodithiobenzoate, phenyl prop-2-yl-4-chlorodithiobenzoate, 1-cyano-1-methyl ethyl-4-chlorodithiobenzoate, 3-chloro-2-butenyl-4-chlorodithiobenzoate, 2-chloro-2-butenyl dithiobenzoate, benzyl dithioacetate, 3-chloro-2-butenyl-1H-pyrrol-1-dithiocarboxylic acid, 2-cyanobutane-2-yl-4-chloro-3,5-dimethyl-1H-pyrazol-1-carbodithioate, cyanomethyl methyl(phenyl)carbodithioate, 2-cyano-2-propyldodecyl trithiocarbonate, dibenzyl trithiocarbonate, butylbenzyl trithiocarbonate, 2-[[(butylthio)thioxomethyl]thio]propionic acid, 2-[[(dodecylthio)thioxomethyl]thio]propionic acid, 2-[[(butylthio)thioxomethyl]thio] succinic acid, 2-[[(dodecylthio)thioxomethyl]thio] succinic acid, 2-[[(dodecylthio)thioxomethyl]thio]-2-methyl propionic acid, 2,2'-[carbonothioylbis(thio)]bis[2-methyl propionic acid], 2-amino-1-methyl-2-oxoethylbutyl trithiocarbonate, benzyl-2-[(2-hydroxyethyl)amino]-1-methyl-2-oxoethyl trithiocarbonate, 3-[[[(t-butyl)thio]thioxomethyl]thio]propionic acid, cyanomethyldodecyl trithiocarbonate, diethylaminobenzyl trithiocarbonate, and dibutylaminobenzyl trithiocarbonate.

The polymerization temperature of the chloroprene polymer is not particularly limited, and as a temperature at which emulsion polymerization is generally performed, the polymerization temperature may be 0 to 50°C or 20 to 50°C. The final polymerization rate of the chloroprene polymer obtained in the aforementioned polymerization step is not particularly limited, and can be arbitrarily adjusted within a range of 30 to 100%. In order to adjust the final conversion rate, when the conversion rate becomes a desired value, a polymerization terminator for terminating the polymerization reaction can be added to terminate the polymerization.

The polymerization terminator is not particularly limited, and it is possible to use a polymerization terminator which is commonly used. Examples of the polymerization terminator include thiodiphenylamine (also known as phenothiazine), 4-t-butylcatechol, and 2,2-methylenebis-4-methyl-6-t-butylphenol.

In the method for producing a chloroprene polymer, the unreacted monomer can be removed from a polymer solution obtained by the polymerization step. The method thereof is not particularly limited, and for example, a steam stripping method is mentioned. Thereafter, the pH is adjusted, steps of freeze coagulation, water washing, hot air drying, and the like of ordinary methods are performed, and thereby a chloroprene polymer can be obtained.

### (2) Diene-based polymer A

The rubber composition of the present embodiment contains a diene-based polymer A having an epoxy group (excluding a compound corresponding to the chloroprene polymer). Since polarity is enhanced when the diene-based polymer A has an epoxy group, compatibility between the chloroprene polymer and the diene-based polymer A is improved, so that abrasion resistance is easily improved. Furthermore, since the epoxy group captures hydrochloric acid that may be produced from the chloroprene polymer, generation of a metal chloride deteriorating water resistance is easily suppressed. By these reasons, it is speculated that a vulcanizate having excellent abrasion resistance and water resistance is easily obtained. However, a factor by which such a vulcanizate is obtained is not limited to the aforementioned factor.

The "diene-based polymer" is a polymer that can be obtained by polymerizing a conjugate diene monomer having a conjugate double bond, and may be a hydrogen additive of such a polymer. Examples of the diene-based polymer A include aliphatic conjugate diene polymers such as polybutadiene and polyisoprene; aliphatic vinyl-aliphatic conjugate diene polymers such as a styrene-butadiene polymer (SBR); vinyl cyanide-conjugate diene copolymers such as an acrylonitrile-butadiene polymer (NBR); hydrogenated SBR; and hydrogenated NBR. The diene-based polymer A may include an aliphatic conjugate diene polymer and may include polybutadiene, from the viewpoint of easily obtaining excellent abrasion resistance, water resistance, oil resistance, and exothermicity in a well-balanced manner. As the diene-based polymer A, epoxidized polybutadiene that is a liquid at 25°C may be used.

The diene-based polymer A may include a compound represented by General Formula (1) below, from the viewpoint of easily obtaining excellent abrasion resistance, water resistance, oil resistance, and exothermicity in a well-balanced manner. 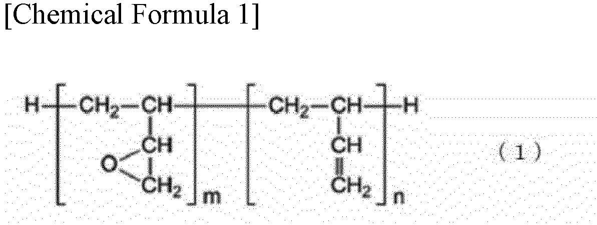 [In the formula, m and n each independently represent an integer of 4 to 35.]

"m" in General Formula (1) may be in the following range from the viewpoint of easily obtaining excellent abrasion resistance, water resistance, oil resistance, and exothermicity in a well-balanced manner. "m" may be 5 or more, 6 or more, 7 or more, or 8 or more. "m" may be 32 or less, 30 or less, 27 or less, 25 or less, 24 or less, 23 or less, 21 or less, 20 or less, 18 or less, 15 or less, 12 or less, 11 or less, 10 or less, 9 or less, 8 or less, or 7 or less. "m" may be 4 to 30, 4 to 23, 4 to 20, 4 to 10, 5 to 10, 6 to 10, 4 to 8, 4 to 7, 7 to 11, or 8 to 11. From the same viewpoint, an average value of "m" in General Formula (1) may be in these ranges in the entire diene-based polymer A contained in the rubber composition.

"n" in General Formula (1) may be in the following range from the viewpoint of easily obtaining excellent abrasion resistance, water resistance, oil resistance, and exothermicity in a well-balanced manner. "n" may be 5 or more, 6 or more, 8 or more, 9 or more, 10 or more, 11 or more, 12 or more, 15 or more, 17 or more, 18 or more, 20 or more, 21 or more, 24 or more, 25 or more, or 27 or more. "n" may be 32 or less, 30 or less, 27 or less, 25 or less, 24 or less, 21 or less, 20 or less, or 18 or less. "n" may be 6 to 35, 10 to 35, 17 to 32, 10 to 30, 12 to 21, 20 to 35, or 27 to 35. From the same viewpoint, an average value of "n" in General Formula (1) may be in these ranges in the entire diene-based polymer A contained in the rubber composition.

"n/m" in General Formula (1) may be in the following range from the viewpoint of easily obtaining excellent abrasion resistance, water resistance, oil resistance, and exothermicity in a well-balanced manner. "n/m" may be 1.5 or more, 2.0 or more, 2.5 or more, 2.8 or more, 3.0 or more, or 3.2 or more. "n/m" may be 5.0 or less, 4.5 or less, 4.0 or less, 3.5 or less, 3.2 or less, 3.0 or less, or 2.8 or less. From these viewpoints, "n/m" may be 1.5 to 5, 2.5 to 4.0, or 2.8 to 3.2. From the same viewpoint, an average value of "n/m" in General Formula (1) may be in these ranges in the entire diene-based polymer A contained in the rubber composition.

The epoxy equivalent of the diene-based polymer A may be in the following range from the viewpoint of easily obtaining excellent abrasion resistance, water resistance, oil resistance, and exothermicity in a well-balanced manner. The epoxy equivalent may be 100 g/eq or more, 120 g/eq or more, 150 g/eq or more, 180 g/eq or more, 190 g/eq or more, 200 g/eq or more, or 210 g/eq or more. The epoxy equivalent may be 300 g/eq or less, 280 g/eq or less, 250 g/eq or less, 240 g/eq or less, or 210 g/eq or less. From these viewpoints, the epoxy equivalent may be 100 to 300 g/eq, 190 to 240 g/eq, 190 to 210 g/eq, or 210 to 240 g/eq.

The weight average molecular weight of the diene-based polymer A may be in the following range from the viewpoint of easily obtaining excellent abrasion resistance, water resistance, oil resistance, and exothermicity in a well-balanced manner. The weight average molecular weight may be 500 or more, 900 or more, 1000 or more, 1200 or more, 1300 or more, 1500 or more, 1800 or more, 2000 or more, or 2200 or more. The weight average molecular weight may be 3000 or less, 2500 or less, 2200 or less, 2000 or less, 1800 or less, 1500 or less, or 1300 or less. From these viewpoints, the weight average molecular weight may be 500 to 3000, 900 to 2500, or 1300 to 2200. The weight average molecular weight of the diene-based polymer A can be obtained by measuring with gel permeation chromatography (GPC) and converting in terms of polystyrene, and can be measured by the same method as that of the weight average molecular weight of the chloroprene polymer.

The content of the diene-based polymer A is more than 0 parts by mass and 25 parts by mass or less with respect to 100 parts by mass of the chloroprene polymer, from the viewpoint of obtaining a vulcanizate having excellent abrasion resistance and water resistance. The content of the diene-based polymer A may be in the following range with respect to 100 parts by mass of the chloroprene polymer, from the viewpoint of easily obtaining excellent abrasion resistance, water resistance, oil resistance, and exothermicity in a well-balanced manner. The content of the diene-based polymer A may be 1 part by mass or more, 3 parts by mass or more, 4 parts by mass or more, 5 parts by mass or more, 8 parts by mass or more, 10 parts by mass or more, 12 parts by mass or more, 13 parts by mass or more, 15 parts by mass or more, or 20 parts by mass or more. The content of the diene-based polymer A may be 22 parts by mass or less, 20 parts by mass or less, 15 parts by mass or less, 13 parts by mass or less, 12 parts by mass or less, 10 parts by mass or less, 8 parts by mass or less, 5 parts by mass or less, or 4 parts by mass or less. From these viewpoints, the content of the diene-based polymer A may be 1 to 22 parts by mass, 4 to 20 parts by mass, 8 to 15 parts by mass, or 10 to 13 parts by mass.

The content of the diene-based polymer A may be in the following range on the basis of the total mass of the rubber composition, from the viewpoint of easily obtaining excellent abrasion resistance, water resistance, oil resistance, and exothermicity in a well-balanced manner. The content of the diene-based polymer A may be 1% by mass or more, 2% by mass or more, 3% by mass or more, 5% by mass or more, 6% by mass or more, 7% by mass or more, or 10% by mass or more. The content of the diene-based polymer A may be 20% by mass or less, 15% by mass or less, 12% by mass or less, 10% by mass or less, 7% by mass or less, 6% by mass or less, 5% by mass or less, or 3% by mass or less. From these viewpoints, the content of the diene-based polymer A may be 1 to 20% by mass, 2 to 12% by mass, or 5 to 10% by mass.

### (3) Organic peroxide

The rubber composition of the present embodiment contains an organic peroxide (excluding a compound corresponding to the chloroprene polymer or the diene-based polymer A). The organic peroxide can be used as a vulcanizing agent. As the organic peroxide, a known compound that is used as a vulcanizing agent for the chloroprene polymer can be used.

Examples of the organic peroxide include dialkyl peroxide, peroxy ketal, and peroxy ester. The organic peroxide may include dialkyl peroxide from the viewpoint of easily obtaining excellent abrasion resistance, water resistance, oil resistance, and exothermicity in a well-balanced manner.

Specific examples of the organic peroxide include dicumyl peroxide, benzoyl peroxide, 1,1-bis(t-butylperoxy)-3,5,5-trimethylcyclohexane, diisobutyryl peroxide, cumylperoxy neodecanoate, di-n-propylperoxy dicarbonate, diisopropylperoxy dicarbonate, di-sec-butylperoxy dicarbonate, 1,1,3,3-tetramethylbutylperoxy neodecanoate, di(4-t-butylcyclohexyl) peroxydicarbonate, di(2-ethylhexyl) peroxydicarbonate, t-hexylperoxy neodecanoate, t-butylperoxy neodecanoate, t-butylperoxy neoheptanoate, t-hexylperoxypivalate, t-butylperoxypivalate, di(3,5,5-trimethylhexanoyl)peroxide, dilauroyl peroxide, 1,1,3,3-tetramethylbutyl peroxy-2-ethylhexanoate, disuccinic acid peroxide, 2,5-dimethyl-2,5-di(2-ethylhexanoylperoxy)hexane, t-hexylperoxy-2-ethylhexanoate, di(4-methylbenzoyl)peroxide, t-butylperoxy-2-ethylhexanoate, di(3-methylbenzoyl)peroxide, benzoyl(3-methylbenzoyl)peroxide, dibenzoylperoxide, 1,1 -di(t-butylperoxy)-2-methylcyclohexane, 1,1-di(t-hexylperoxy)-3,3,5-trimethylcyclohexane, 1,1-di(t-hexylperoxy)cyclohexane, 1,1-di(t-butylperoxy)cyclohexane, 2,2-di(4,4-di-(t-butylperoxy)cyclohexyl)propane, t-hexylperoxyisopropyl monocarbonate, t-butylperoxy maleic acid, t-butylperoxy-3,5,5-trimethylhexanoate, t-butylperoxy laurate, t-butylperoxyisopropyl monocarbonate, t-butylperoxy2-ethylhexyl monocarbonate, t-hexylperoxy benzoate, 2,5-di-methyl-2,5-di(benzoylperoxy)hexane, t-butylperoxy acetate, 2,2-di-(t-butylperoxy)butane, t-butylperoxy benzoate, n-butyl-4,4-di-(t-butylperoxy)valerate, 1,4-bis[(t-butylperoxy)isopropyl]benzene, di-t-hexyl peroxide, 2,5-dimethyl-2,5-bis(t-butylperoxy)hexane, t-butyl-α-cumyl peroxide, di-t-butyl peroxide, p-menthane hydroperoxide, 2,5-bis(t-butylperoxy)-2,5-dimethyl-3-hexyne, diisopropylbenzene hydroperoxide, 1,1,3,3-tetramethylbutyl hydroperoxide, cumene hydroperoxide, and t-butyl hydroperoxide. The organic peroxide may include at least one selected from the group consisting of dicumyl peroxide, 1,4-bis[(t-butylperoxy)isopropyl]benzene, t-butyl-α-cumyl peroxide, 2,5-dimethyl-2,5-bis(t-butylperoxy)hexane, and 2,5-bis(t-butylperoxy)-2,5-dimethyl-3-hexyne from the viewpoint of easily obtaining excellent abrasion resistance, water resistance, oil resistance, and exothermicity in a well-balanced manner, and may include 1,4-bis[(t-butylperoxy)isopropyl]benzene from the viewpoint of easily obtaining particularly excellent abrasion resistance, water resistance, oil resistance, and exothermicity.

The content of the organic peroxide is 0.3 to 1.8 parts by mass with respect to 100 parts by mass of the chloroprene polymer, from the viewpoint of obtaining a vulcanizate having excellent abrasion resistance and water resistance.

As the content of the organic peroxide or the content of the dialkyl peroxide, a content C1 may be in the following range with respect to 100 parts by mass of the chloroprene polymer, from the viewpoint of easily obtaining excellent abrasion resistance, water resistance, oil resistance, and exothermicity in a well-balanced manner. The content C1 may be 0.4 parts by mass or more, 0.5 parts by mass or more, 0.8 parts by mass or more, 1 part by mass or more, 1.2 parts by mass or more, or 1.4 parts by mass or more. The content C1 may be 1.5 parts by mass or less, 1.4 parts by mass or less, 1.2 parts by mass or less, 1 part by mass or less, 0.8 parts by mass or less, 0.5 parts by mass or less, or 0.4 parts by mass or less. From these viewpoints, the content C1 may be 0.3 to 1.5 parts by mass, 0.4 to 1.2 parts by mass, or 0.5 to 1 part by mass.

As the content of the organic peroxide or the content of the dialkyl peroxide, a content C2 may be in the following range with respect to 100 parts by mass of the diene-based polymer A, from the viewpoint of easily obtaining excellent abrasion resistance, water resistance, oil resistance, and exothermicity in a well-balanced manner. The content C2 may be 1 part by mass or more, 2 parts by mass or more, 3 parts by mass or more, 4 parts by mass or more, 5 parts by mass or more, 8 parts by mass or more, 10 parts by mass or more, 12 parts by mass or more, 14 parts by mass or more, 15 parts by mass or more, or 20 parts by mass or more. The content C2 may be 100 parts by mass or less, less than 100 parts by mass, 80 parts by mass or less, 50 parts by mass or less, 40 parts by mass or less, 30 parts by mass or less, 25 parts by mass or less, 20 parts by mass or less, 15 parts by mass or less, 14 parts by mass or less, 12 parts by mass or less, 10 parts by mass or less, 8 parts by mass or less, 5 parts by mass or less, or 4 parts by mass or less. From these viewpoints, the content C2 may be 1 to 100 parts by mass, 5 to 20 parts by mass, or 8 to 15 parts by mass.

As the content of the organic peroxide or the content of the dialkyl peroxide, a content C3 may be in the following range on the basis of the total mass of the rubber composition, from the viewpoint of easily obtaining excellent abrasion resistance, water resistance, oil resistance, and exothermicity in a well-balanced manner. The content C3 may be 0.1% by mass or more, 0.2% by mass or more, 0.3% by mass or more, 0.4% by mass or more, 0.45% by mass or more, 0.47% by mass or more, 0.5% by mass or more, 0.7% by mass or more, or 0.75% by mass or more. The content C3 may be 2% by mass or less, 1.5% by mass or less, 1.2% by mass or less, 1% by mass or less, 0.8% by mass or less, 0.7% by mass or less, 0.5% by mass or less, 0.48% by mass or less, 0.45% by mass or less, 0.4% by mass or less, or 0.3% by mass or less. From these viewpoints, the content C3 may be 0.1 to 2% by mass, 0.3 to 0.8% by mass, or 0.4 to 0.7% by mass.

### (4) Other components

The rubber composition of the present embodiment may contain a rubber component (excluding the chloroprene polymer); a vulcanizing agent; a vulcanization accelerator; a plasticizer; a filler (reinforcing agent); a processing aid; an antioxidant, and the like, as a component different from the chloroprene polymer, the diene-based polymer A, and the organic peroxide mentioned above. The rubber composition of the present embodiment may not contain at least one of these components.

Examples of the vulcanizing agent not corresponding to the organic peroxide include a metal oxide. Examples of the metal oxide include zinc oxide, magnesium oxide, lead oxide, trilead tetraoxide, iron trioxide, titanium dioxide, calcium oxide, and hydrotalcite.

The content of the vulcanizing agent, the content of the zinc oxide, the content of the magnesium oxide, or the content of the hydrotalcite may be more than 0 parts by mass and may be 0 parts by mass, with respect to 100 parts by mass of a rubber component contained in the rubber composition or 100 parts by mass of the chloroprene polymer. The content of the vulcanizing agent, the content of the zinc oxide, the content of the magnesium oxide, or the content of the hydrotalcite may be 10 parts by mass or less, 5 parts by mass or less, 4 parts by mass or less, less than 4 parts by mass, 2 parts by mass or less, less than 2 parts by mass, 1 part by mass or less, 0.1 parts by mass or less, 0.01 parts by mass or less, or 0.001 parts by mass or less, with respect to 100 parts by mass of a rubber component contained in the rubber composition or 100 parts by mass of the chloroprene polymer, from the viewpoint of easily obtaining excellent abrasion resistance. The content of the vulcanizing agent, the content of the zinc oxide, the content of the magnesium oxide, or the content of the hydrotalcite may be 0.1% by mass or less, 0.01% by mass or less, 0.001% by mass or less, or 0% by mass, on the basis of the total mass of the rubber composition.

Examples of the vulcanization accelerator include vulcanization accelerators such as guanidine-based, thiuram-based, and thiazole-based vulcanization accelerators; dimethylammonium hydrogen isophthalate; and 1,2-dimercapto-1,3,4-thiadiazole derivatives. The content of a guanidine compound, a thiuram compound, or a thiazole compound may be 0.1 parts by mass or less, less than 0.1 parts by mass, 0.01 parts by mass or less, 0.001 parts by mass or less, or 0 parts by mass, with respect to 100 parts by mass of the chloroprene polymer.

As the plasticizer, a plasticizer having compatibility with the chloroprene polymer can be used, and examples thereof include vegetable oils (such as rape seed oil), phthalate-based plasticizers, DOS, DOA, ester-based plasticizers, polyether ester-based plasticizers, thioether-based plasticizers, aromatic oils, and naphthene oils. The content of the plasticizer may be 50 parts by mass or less, 30 parts by mass or less, 20 parts by mass or less, or 10 parts by mass or less, with respect to 100 parts by mass of the chloroprene polymer, from the viewpoint of easily obtaining excellent abrasion resistance, water resistance, oil resistance, and exothermicity in a well-balanced manner.

Examples of the filler (reinforcing agent) include carbon black, silica, clay, talc, and calcium carbonate. The content of the filler may be 5 to 100 parts by mass with respect to 100 parts by mass of the chloroprene polymer from the viewpoint of obtaining excellent heat resistance. The content of silica may be 20 parts by mass or less, less than 20 parts by mass, 10 parts by mass or less, 5 parts by mass or less, 3 parts by mass or less, less than 3 parts by mass, 1 part by mass or less, 0.1 parts by mass or less, or 0 parts by mass, with respect to 100 parts by mass of a rubber component contained in the rubber composition or 100 parts by mass of the chloroprene polymer.

Examples of the processing aid include fatty acids such as stearic acid; paraffin-based processing aids such as polyethylene; and fatty acid amides. The content of the processing aid may be 0.5 to 5 parts by mass with respect to 100 parts by mass of the chloroprene polymer.

Examples of the antioxidant include an amine-based antioxidant, an imidazole-based antioxidant, a metal salt of carbamic acid, a phenol-based antioxidant, and wax. Examples of the amine-based antioxidant having a large effect of improving heat resistance include 4,4'-bis(a,a-dimethylbenzyl)diphenylamine and octylated diphenylamine, and the effect of improving heat resistance of 4,4'-bis(α,α-dimethylbenzyl)diphenylamine is particularly large.

The rubber composition of the present embodiment may contain at least one selected from the group consisting of an imidazole compound, a maleimide compound, a triazine compound, an acrylic polyfunctional monomer, and an epoxy resin, as a component different from the chloroprene polymer, the diene-based polymer A, and the organic peroxide mentioned above, and may not contain at least one selected from the group consisting of an imidazole compound, a maleimide compound, a triazine compound, an acrylic polyfunctional monomer, and an epoxy resin. The content of at least one selected from the group consisting of an imidazole compound, a maleimide compound, a triazine compound, an acrylic polyfunctional monomer, and an epoxy resin may be 0.5 parts by mass or less, less than 0.5 parts by mass, 0.3 parts by mass or less, less than 0.3 parts by mass, 0.1 parts by mass or less, less than 0.1 parts by mass, 0.01 parts by mass or less, or 0 parts by mass, with respect to 100 parts by mass of a rubber component contained in the rubber composition or 100 parts by mass of the chloroprene polymer.

The Mooney viscosity (ML₁₊₄, 100°C) of the rubber composition of the present embodiment may be in the following range from the viewpoint of easily maintaining the processability of the rubber composition. The Mooney viscosity may be 10 or more, 15 or more, 20 or more, 25 or more, 30 or more, 35 or more, or 40 or more. The Mooney viscosity may be 90 or less, 85 or less, 80 or less, 75 or less, 70 or less, 65 or less, 60 or less, or 55 or less. From these viewpoints, the Mooney viscosity may be 10 to 90 or 20 to 80.

The rubber composition of the present embodiment can be obtained by kneading the aforementioned component at a temperature equal to or lower than the vulcanization temperature thereof. As a kneading apparatus, a mixer, a banbury mixer, a kneader mixer, a twin roll, or the like can be used.

### <Unvulcanized molded article, vulcanizate, and vulcanized molded article>

An unvulcanized molded article of the present embodiment uses the rubber composition of the present embodiment and is a molded article (molded product) of the rubber composition (unvulcanized state) of the present embodiment. A method for producing an unvulcanized molded article of the present embodiment includes a step of molding the rubber composition (unvulcanized state) of the present embodiment. The unvulcanized molded article of the present embodiment is composed of the rubber composition (unvulcanized state) of the present embodiment.

A vulcanizate of the present embodiment is a vulcanizate of the rubber composition of the present embodiment. A method for producing a vulcanizate of the present embodiment includes a step of vulcanizing the rubber composition of the present embodiment.

A vulcanized molded article of the present embodiment is a vulcanized molded article of the rubber composition of the present embodiment. The vulcanized molded article of the present embodiment uses the vulcanizate of the present embodiment and is a molded article (molded product) of the vulcanizate of the present embodiment. The vulcanized molded article of the present embodiment is composed of the vulcanizate of the present embodiment.

The vulcanized molded article of the present embodiment can be obtained by molding a vulcanizate obtained by vulcanizing the rubber composition (unvulcanized state) of the present embodiment, and can also be obtained by vulcanizing a molded article obtained by molding the rubber composition (unvulcanized state) of the present embodiment. The vulcanized molded article of the present embodiment can be obtained by vulcanizing the rubber composition of the present embodiment after molding or during molding. A method for producing a vulcanized molded article of the present embodiment includes a step of molding the vulcanizate of the present embodiment or a step of vulcanizing the unvulcanized molded article of the present embodiment.

The unvulcanized molded article, the vulcanizate, and the vulcanized molded article of the present embodiment can be used as rubber parts in various industrial fields such as buildings, structures, ships, rails, coal mine, and automobiles, and can be used as rubber parts such as automobile rubber members (for example, automobile sealing materials), hose materials, molded rubber articles, gaskets, rubber rolls, industrial cables, and industrial conveyor belts.

Examples of methods of molding the rubber composition (unvulcanized state) and the vulcanizate of the present embodiment include press molding, extrusion molding, and calender molding. The temperature at which the rubber composition is vulcanized may be appropriately set according to the composition of the rubber composition, and is preferably 140 to 220°C or 160 to 190°C. The vulcanization time for vulcanizing the rubber composition may be appropriately set according to the composition of the rubber composition, the shape of the unvulcanized molded article, and the like, and may be 10 to 60 minutes.

### Examples

Hereinafter, the present invention will be more specifically described on the basis of Examples and Comparative Examples; however, the present invention is not limited to these Examples.

### <Production of chloroprene-acrylonitrile copolymer rubber>

To a polymerization tank having an inner volume of 3 L and equipped with a heating/cooling jacket and a stirrer, 24 parts by mass of a chloroprene (monomer), 24 parts by mass of an acrylonitrile (monomer), 0.5 parts by mass of diethylxanthogen disulfide, 200 parts by mass of pure water, 5.00 parts by mass of potassium rosinate (manufactured by Harima Chemicals, Inc.), 0.40 parts by mass of sodium hydroxide, and 2.0 parts by mass of sodium salt of β-naphthalene sulfonic acid formalin condensate (manufactured by Kao Corporation) were added. Next, 0.1 parts by mass of potassium persulfate was added as a polymerization initiator, and then emulsion polymerization was performed under a nitrogen flow at a polymerization temperature of 40°C. The aforementioned chloroprene was added portionwise 20 seconds after polymerization initiation, and based on the refrigerant calorimetric change for 10 seconds after polymerization initiation, the portionwise addition flow rate was adjusted by an electromagnetic valve, and thereafter the flow rate was re-adjusted every 10 seconds to ensure continuity. At the time point when the polymerization rate with respect to the total amount of the chloroprene and the acrylonitrile became 50%, 0.02 parts by mass of phenothiazine as a polymerization terminator was added to terminate the polymerization. Thereafter, by removing the unreacted monomer in the reaction solution under reduced pressure, a chloroprene-acrylonitrile copolymer latex was obtained.

The aforementioned polymerization rate [%] of the chloroprene-acrylonitrile copolymer latex was calculated from the dry mass when the chloroprene-acrylonitrile copolymer latex was air-dried. Specifically, the polymerization rate thereof was calculated by the following Formula (A). In the formula, the "solid content concentration" refers to the concentration [% by mass] of the solid fraction obtained by heating 2 g of the sampled chloroprene-acrylonitrile copolymer latex at 130°C to remove volatile components such as the solvent (water), volatile chemicals, and the raw materials. The "total charged amount" refers to the total amount [g] of the raw materials, the reagents, the solvent (water) which had been charged into the polymerization tank from the polymerization initiation through a certain time. The "non-evaporated residual fraction" refers to the mass [g] of the chemicals which did not evaporate under a condition of 130°C and remained as a solid fraction together with the polymer, among the chemicals and the raw materials which had been input from the polymerization initiation through a certain time. The "monomer charged amount" refers to the total amount [g] of the monomer which was input initially to the polymerization tank and the monomer which was added portionwise from the polymerization initiation through a certain time. Note that, the "monomer" described here refers to the total amount of the chloroprene and the acrylonitrile. Polymerization rate = {[(Total charged amount × Solid content concentration/100) - Non-evaporated residual fraction]/Monomer charged amount} × 100

After the pH of the aforementioned chloroprene-acrylonitrile copolymer latex was adjusted to 7.0 using acetic acid or sodium hydroxide, the chloroprene-acrylonitrile copolymer latex was subjected to freeze coagulation on a metal plate cooled to -20°C so as to be demulsifed, thereby obtaining a sheet. This sheet was washed with water and then dried for 15 minutes at 130°C, thereby obtaining a chloroprene-acrylonitrile copolymer rubber (chloroprene-acrylonitrile copolymer) in a solid form.

The weight average molecular weight (Mw), the number average molecular weight (Mn), and the molecular weight distribution (Mw/Mn) of the chloroprene-acrylonitrile copolymer rubber were measured by a high-speed GPC apparatus (TOSOH HLC-8320GPC: manufactured by Tosoh Corporation) (in terms of standard polystyrene) after a solution having a sample adjustment concentration of 0.1% by mass was obtained using the aforementioned chloroprene-acrylonitrile copolymer rubber with THF. At this time, TSK Guard Column HHR-H was used as a precolumn, three columns of HSK gel GMHHR-H were used as an analytical column, and the solution was allowed to flow out at a sample pump pressure of 8.0 to 9.5 MPa and a flow rate of 1 mL/min at 40°C and detected by a differential refractometer.

The outflow time and the molecular weight were obtained using a calibration curve prepared by measuring nine standard polystyrene samples whose molecular weights listed below are known in total. Mw = 8.42×106, 1.09×106, 7.06×105, 4.27×105, 1.90×105, 9.64×104, 3.79×104, 1.74×104, 2.63×103

The weight average molecular weight (Mw) of the chloroprene-acrylonitrile copolymer rubber was 473×10³ g/mol, the number average molecular weight (Mn) was 138×10³ g/mol, and the molecular weight distribution (Mw/Mn) was 3.4.

The content of the acrylonitrile monomer unit contained in the chloroprene-acrylonitrile copolymer rubber was calculated from the content of the nitrogen atom in the chloroprene-acrylonitrile copolymer rubber. Specifically, the content of the acrylonitrile monomer unit was calculated by measuring the content of the nitrogen atom in 100 mg of the chloroprene-acrylonitrile copolymer rubber using an element analysis apparatus (SUMIGRAPH 220F: manufactured by Sumika Chemical Analysis Service, Ltd.). The content of the acrylonitrile monomer unit was 9.9% by mass.

The aforementioned element analysis was performed as follows. As for the electric furnace temperature, a reaction furnace, a reduction furnace, a column temperature, and a detector temperature were set at 900°C, 600°C, 70°C, and 100°C, respectively, oxygen gas was flowed as a combustion gas at 0.2 mL/min, and helium gas was flowed as a carrier gas at 80 mL/min. A standard curve was made using aspartic acid whose nitrogen content is known (10.52%) as a standard substance.

### <Production of rubber composition>

Rubber compositions of Examples and Comparative Examples were obtained by kneading components shown in Table 1 or Table 2, 10 parts by mass of a plasticizer, 1 part by mass of a processing aid, 50 parts by mass of a filler, and 3 parts by mass of a thermal antioxidant with an 8-inch open roll.

Respective components used for obtaining the rubber composition are as follows.
Chloroprene polymer 1: aforementioned chloroprene-acrylonitrile copolymer rubber
Chloroprene polymer 2: chloroprene rubber (homopolymer of chloroprene), "S-40V" manufactured by Denka Company Limited
Epoxy group-containing polybutadiene rubber 1: the compound represented by Formula (1) mentioned above, m = 4 to 7 (average value: 6), n = 12 to 21 (average value: 17), n/m = 2.8 (average value), weight average molecular weight = 1300, epoxy equivalent = 190 to 210 g/eq, "JP-100" manufactured by Nippon Soda Co., Ltd.
Epoxy group-containing polybutadiene rubber 2: the compound represented by Formula (1) mentioned above, m = 8 to 11 (average value: 10), n = 27 to 35 (average value: 32), n/m = 3.2 (average value), weight average molecular weight = 2200, epoxy equivalent = 210 to 240 g/eq, "JP-200" manufactured by Nippon Soda Co., Ltd.
Epoxy group-free polybutadiene rubber: "LBR-307" manufactured by Kuraray Co., Ltd.
Organic peroxide 1: 1,4-bis[(t-butylperoxy)isopropyl]benzene, "PERBUTYL P" manufactured by NOF CORPORATION
Organic peroxide 2: 2,5-bis(t-butylperoxy)-2,5-dimethyl-3-hexyne, "PERHEXYNE 25B" manufactured by NOF CORPORATION
Magnesium oxide: "KYOWAMAG (registered trademark) 150" manufactured by Kyowa Chemical Industry Co., Ltd.
Plasticizer: polyether ester-based plasticizer, "ADK CIZER (registered trademark) RS-700" manufactured by ADEKA Corporation
Processing aid: stearic acid, "Stearic Acid 50S" manufactured by New Japan Chemical Co., Ltd.
Filler: carbon black (FEF), "ASAHI #60U" manufactured by Asahi Carbon Co., Ltd.
Thermal antioxidant: 4,4'-bis(a,a-dimethylbenzyl)diphenylamine, "NOCRAC (registered trademark) CD" manufactured by OUCHI SHINKO CHEMICAL INDUSTRIAL CO., LTD.

### <Measurement of Mooney viscosity>

Regarding the aforementioned rubber composition, the Mooney viscosity (ML₁₊₄) was measured according to JIS K 6300-1 under conditions of a type-L-rotor-preheating time of 1 minute, a rotation time of 4 minutes, and a test temperature of 100°C. Results are shown in Table 1 and Table 2.

### <Production of vulcanized molded article>

The aforementioned rubber composition was subjected to press vulcanization under a condition of 160°C × 40 minutes to produce an annular vulcanized molded article A having a diameter of 63.6 mm, a thickness of 12.7 mm, and a central hole of 12.7 mm. The aforementioned rubber composition was subjected to press vulcanization under a condition of 170°C × 20 minutes to produce a sheet-shaped vulcanized molded article B having a thickness of 2 mm. The aforementioned rubber composition was subjected to press vulcanization under a condition of 160°C × 40 minutes to produce a cylindrical vulcanized molded article C having a diameter of 15 mm and a thickness of 25 mm.

### <Evaluation of vulcanized molded article>

The aforementioned vulcanized molded article was evaluated as follows. Results are shown in Table 1 and Table 2.

### (Abrasion resistance)

The aforementioned annular vulcanized molded article A was subjected to Akron abrasion test (abrasion 1000 times, ΔV, unit: mm³) according to JIS K 6264-2:2019. A case where the abrasion resistance was 115 mm³ or less in the case of using a copolymer of chloroprene was determined as good, and a case where the abrasion resistance was 130 mm³ or less in the case of using a homopolymer of chloroprene was determined as good.

### (Water resistance)

A test piece having a width of 20 mm, a length of 50 mm, and a thickness of 2 mm was obtained using the aforementioned sheet-shaped vulcanized molded article B. The test piece was immersed in water at 80°C for 72 hours, and then the volume of the test piece was measured before and after the test to measure a volume change rate. The volume change rate is expressed as "Volume change rate (%) = 100 × (W2 - W1)/W1" when the volume of the test piece before the test is designated as W1 and the volume of the test piece after the test is designated as W2. A case where the volume change rate was 4% or less was determined as good.

### (Oil resistance)

According to JIS K 6258, the aforementioned sheet-shaped vulcanized molded article B was molded into a length of 15 cm and a width of 15 cm to obtain a test piece. The test piece was immersed in a test oil at 130°C (automobile high lubricant oil, ASTM No. 3, IRM 903 oil) for 72 hours, and then the volume of the test piece before and after the test was measured to calculate a volume change rate. The volume change rate can be calculated by the same aforementioned formula as that of the water resistance.

### (Exothermicity)

According to JIS K 6265:2018, the calorific value (ΔT, unit: °C) was measured for the aforementioned cylindrical vulcanized molded article C under conditions of 50°C, a deformation of 0.175 inches, a load of 55 pounds, and a frequency per minute of 1800.

**[Table 1]**

| | | Example | | | | | | | Comparative Example | | | | |
|---|---|---|---|---|---|---|---|---|---|---|---|---|---|
| | | A1 | A2 | A3 | A4 | A5 | A6 | A7 | A1 | A2 | A3 | A4 | A5 |
| Chloroprene polymer 1 (copolymer) | parts by mass | 100 | 100 | 100 | 100 | 100 | 100 | 100 | 100 | 100 | 100 | 100 | 100 |
| Epoxy group-containing polybutadiene rubber 1 | | 10 | 4 | 20 | 10 | 10 | | 10 | | 30 | | 10 | 10 |
| Epoxy group-containing polybutadiene rubber 2 | | | | | | | 10 | | | | | | |
| Epoxy group-free polybutadiene rubber | | | | | | | | | | | 10 | | |
| Organic peroxide 1 | | 0.8 | 0.8 | 0.8 | 0.4 | 1.4 | 0.8 | | 0.8 | 0.8 | 0.8 | 0.2 | 2 |
| Organic peroxide 2 | | | | | | | | 0.8 | | | | | |
| Magnesium oxide | | | | | | | | | 4 | | | | |
| Mooney viscosity (ML₁₊₄ at 100°C) | - | 40 | 60 | 22 | 35 | 36 | 42 | 42 | 79 | 11 | 62 | 55 | 56 |
| Abrasion resistance | mm³ | 65 | 78 | 93 | 91 | 106 | 64 | 79 | 121 | 116 | 137 | 110 | 151 |
| Water resistance | % | 3 | 4 | 3 | 3 | 2 | 3 | 3 | 9 | 3 | 5 | 5 | 2 |
| Oil resistance | % | 11 | 13 | 11 | 11 | 9 | 10 | 11 | 19 | 11 | 45 | 13 | 9 |
| Exothermicity | °C | 23 | 21 | 25 | 32 | 19 | 23 | 25 | 39 | 24 | 32 | 41 | 19 |

**[Table 2]**

| | | Example | | | | | | | Comparative Example | | | | |
|---|---|---|---|---|---|---|---|---|---|---|---|---|---|
| | | B1 | B2 | B3 | B4 | B5 | B6 | B7 | B1 | B2 | B3 | B4 | B5 |
| Chloroprene polymer 2 (homopolymer) | parts by mass | 100 | 100 | 100 | 100 | 100 | 100 | 100 | 100 | 100 | 100 | 100 | 100 |
| Epoxy group-containing polybutadiene rubber 1 | | 10 | 4 | 20 | 10 | 10 | | 10 | | 30 | | 10 | 10 |
| Epoxy group-containing polybutadiene rubber 2 | | | | | | | 10 | | | | | | |
| Epoxy group-free polybutadiene rubber | | | | | | | | | | | 10 | | |
| Organic peroxide 1 | | 0.8 | 0.8 | 0.8 | 0.4 | 1.4 | 0.8 | | 0.8 | 0.8 | 0.8 | 0.2 | 2 |
| Organic peroxide 2 | | | | | | | | 0.8 | | | | | |
| Magnesium oxide | | | | | | | | | 4 | | | | |
| Mooney viscosity (ML₁₊₄ at 100°C) | - | 39 | 61 | 20 | 32 | 33 | 35 | 40 | 78 | 10 | 60 | 55 | 56 |
| Abrasion resistance | mm³ | 80 | 93 | 108 | 106 | 121 | 79 | 94 | 136 | 131 | 152 | 125 | 166 |
| Water resistance | % | 3 | 4 | 3 | 3 | 2 | 3 | 3 | 9 | 3 | 5 | 5 | 2 |
| Oil resistance | % | 51 | 53 | 51 | 51 | 49 | 50 | 51 | 59 | 51 | 76 | 53 | 49 |
| Exothermicity | °C | 23 | 21 | 25 | 32 | 19 | 23 | 25 | 39 | 24 | 32 | 41 | 19 |

From the results shown in Table 1 and Table 2, according to the rubber compositions of Examples, a vulcanizate having excellent abrasion resistance and water resistance can be obtained. Such a vulcanizate can be suitably used as a molded article for a rubber roll and the like.

## Claims

1. A rubber composition comprising:
100 parts by mass of a chloroprene polymer;
more than 0 parts by mass and 25 parts by mass or less of a diene-based polymer having an epoxy group; and
0.3 to 1.8 parts by mass of an organic peroxide, wherein
the chloroprene polymer comprises a copolymer of chloroprene.

2. A rubber composition comprising:
100 parts by mass of a chloroprene polymer;
more than 0 parts by mass and 25 parts by mass or less of a diene-based polymer having an epoxy group; and
0.3 to 1.8 parts by mass of an organic peroxide, wherein
the chloroprene polymer comprises a homopolymer of chloroprene.

3. The rubber composition according to claim 1, wherein the chloroprene polymer comprises a copolymer of chloroprene with at least one selected from the group consisting of 2,3-dichloro-1,3-butadiene and acrylonitrile.

4. The rubber composition according to any one of claims 1 to 3, wherein the diene-based polymer comprises a compound represented by General Formula (1) below, and
n/m in General Formula (1) is 1.5 to 5. 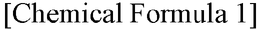 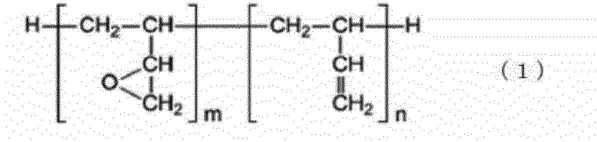 [In the formula, m and n each independently represent an integer of 4 to 35.]

5. The rubber composition according to any one of claims 1 to 4, wherein a weight average molecular weight of the diene-based polymer is 900 to 2500.

6. The rubber composition according to any one of claims 1 to 5, wherein the organic peroxide comprises at least one selected from the group consisting of dicumyl peroxide, 1,4-bis[(t-butylperoxy)isopropyl]benzene, t-butyl-α-cumyl peroxide, 2,5-dimethyl-2,5-bis(t-butylperoxy)hexane, and 2,5-bis(t-butylperoxy)-2,5-dimethyl-3-hexyne.

7. A vulcanizate of the rubber composition according to any one of claims 1 to 6.

8. A vulcanized molded article of the rubber composition according to any one of claims 1 to 6.

## Patentansprüche

1. Kautschukzusammensetzung, umfassend:
100 Massenteile eines Chloroprenpolymers;
mehr als 0 Massenteile und 25 Massenteile oder weniger eines dienbasierten Polymers mit einer Epoxygruppe; und
0,3 bis 1,8 Massenteile eines organischen Peroxids, wobei
das Chloroprenpolymer ein Copolymer von Chloropren umfasst.

2. Kautschukzusammensetzung, umfassend:
100 Massenteile eines Chloroprenpolymers;
mehr als 0 Massenteile und 25 Massenteile oder weniger eines dienbasierten Polymers mit einer Epoxygruppe; und
0,3 bis 1,8 Massenteile eines organischen Peroxids, wobei
das Chloroprenpolymer ein Homopolymer von Chloropren umfasst.

3. Kautschukzusammensetzung gemäß Anspruch 1, wobei das Chloroprenpolymer ein Copolymer von Chloropren mit mindestens einem, ausgewählt aus der Gruppe, bestehend aus 2,3-Dichlor-1,3-butadien und Acrylnitril, umfasst.

4. Kautschukzusammensetzung gemäß einem der Ansprüche 1 bis 3, wobei das dienbasierte Polymer eine Verbindung, dargestellt durch die nachstehende Allgemeine Formel (1), umfasst, und
n/m in der Allgemeinen Formel (1) 1,5 bis 5 beträgt. 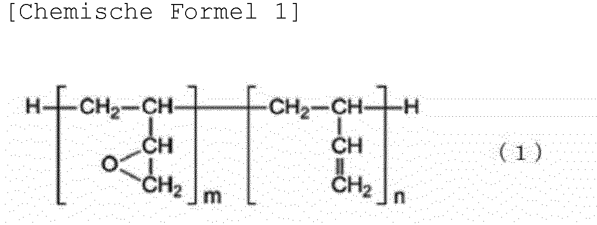
[In der Formel stehen m und n jeweils unabhängig voneinander für eine ganze Zahl von 4 bis 35.]

5. Kautschukzusammensetzung gemäß einem der Ansprüche 1 bis 4, wobei ein gewichtsmittleres Molekulargewicht des dienbasierten Polymers 900 bis 2500 beträgt.

6. Kautschukzusammensetzung gemäß einem der Ansprüche 1 bis 5, wobei das organische Peroxid mindestens eines, ausgewählt aus der Gruppe, bestehend aus Dicumylperoxid, 1,4-Bis[(t-butylperoxy)isopropyl]benzol, t-Butyl-α-cumylperoxid, 2,5-Dimethyl-2,5-bis(t-butylperoxy)hexan und 2,5-Bis(t-butylperoxy)-2,5-dimethyl-3-hexin, umfasst.

7. Vulkanisat der Kautschukzusammensetzung gemäß einem der Ansprüche 1 bis 6.

8. Vulkanisierter Formartikel der Kautschukzusammensetzung gemäß einem der Ansprüche 1 bis 6.

## Revendications

1. Composition de caoutchouc comprenant :
100 parties en masse d'un polymère de chloroprène ;
plus de 0 partie en masse et 25 parties en masse ou moins d'un polymère à base de diène possédant un groupe époxy ; et
0,3 à 1,8 parties en masse d'un peroxyde organique, dans laquelle
le polymère de chloroprène comprend un copolymère de chloroprène.

2. Composition de caoutchouc comprenant :
100 parties en masse d'un polymère de chloroprène ;
plus de 0 partie en masse et 25 parties en masse ou moins d'un polymère à base de diène possédant un groupe époxy ; et
0,3 à 1,8 parties en masse d'un peroxyde organique, dans laquelle
le polymère de chloroprène comprend un homopolymère de chloroprène.

3. Composition de caoutchouc selon la revendication 1, dans laquelle le polymère de chloroprène comprend un copolymère de chloroprène avec au moins l'un sélectionné dans le groupe constitué du 2,3-dichloro-1,3-butadiène et de l'acrylonitrile.

4. Composition de caoutchouc selon l'une quelconque des revendications 1 à 3, dans laquelle le polymère à base de diène comprend un composé représenté par la Formule générale (1) ci-dessous, et
n/m dans la Formule générale (1) est compris entre 1,5 et 5. 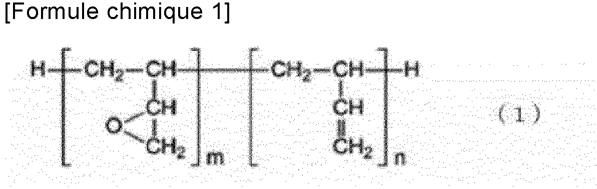 [Dans la formule, m et n représentent chacun indépendamment un nombre entier de 4 à 35.]

5. Composition de caoutchouc selon l'une quelconque des revendications 1 à 4, dans laquelle le poids moléculaire moyen en poids du polymère à base de diène est compris entre 900 et 2 500.

6. Composition de caoutchouc selon l'une quelconque des revendications 1 à 5, dans laquelle le peroxyde organique comprend au moins l'un sélectionné dans le groupe constitué du peroxyde de dicumyle, du 1,4-bis[(t-butylperoxy)isopropyl]benzène, du peroxyde de t-butyl-α-cumyle, du 2,5-diméthyl-2,5-bis(t-butylperoxy)hexane, et du2,5-bis(t-butylperoxy)-2,5-diméthyl-3-hexyne.

7. Vulcanisat de la composition de caoutchouc selon l'une quelconque des revendications 1 à 6.

8. Article moulé vulcanisé de la composition de caoutchouc selon l'une quelconque des revendications 1 à 6.
